# EUROPÄISCHE PATENTANMELDUNG

(11) **EP 4 821 699 A1**
(43) Veröffentlichungstag der Anmeldung: **14.10.2026**
(21) Anmeldenummer: 25169650.6
(22) Anmeldetag: 10.04.2025
(51) Int. Cl.: B42D 25/28, B42D 25/305, B42D 25/36, B42D 25/382, B42D 25/45, G06K 19/06, G07F 7/06

(54) **ARTIKEL MIT EINER SICHERHEITSEINRICHTUNG ZUR VERBESSERUNG DER FÄLSCHUNGSSICHERHEIT DES ARTIKELS, VERFAHREN ZUR HERSTELLUNG EINES SOLCHEN ARTIKELS, VERIFIZIERUNGSVORRICHTUNG SOWIE VERFAHREN ZUR VERIFIZIERUNG EINES SOLCHEN ARTIKELS**

(71) Anmelder: Fraunhofer-Gesellschaft zur Förderung der angewandten Forschung e.V., 80686 München (DE)
(72) Erfinder: HAUER, Benedikt, 79110 Freiburg (DE); HOFMANN, Andreas, 79110 Freiburg (DE)
(74) Vertreter: WSL Patentanwälte Partnerschaft mbB

(57) **Zusammenfassung**

Die vorliegende Erfindung betrifft einen Artikel mit einer Sicherheitseinrichtung zur Verbesserung der Fälschungssicherheit des Artikels. Dabei ist die Sicherheitseinrichtung erfindungsgemäß aus einer ein Symbol repräsentierenden Beschichtung auf dem Artikel gebildet, wobei die Beschichtung ein Material umfasst, das ausgewählt ist aus einer Gruppe bestehend aus einem Siliziumoxid, einem Aluminiumoxid, einem Siliziumnitrid, einem Aluminiumnitrid und einem Siloxan oder einer Kombination davon.

## Beschreibung

Die vorliegende Erfindung betrifft einen Artikel mit einer Sicherheitseinrichtung zur Verbesserung der Fälschungssicherheit des Artikels.

Darüber hinaus betrifft die vorliegende Erfindung auch eine Verifizierungsvorrichtung zum Erfassen einer Sicherheitseinrichtung auf dem Artikel, ein System mit einer Mehrzahl von Artikeln und einer Verifizierungsvorrichtung, ein Verfahren zum Herstellen eines Artikels mit einer Sicherheitseinrichtung, sowie ein Verfahren zum Verifizieren einer Sicherheitseinrichtung aus einer ein Symbol repräsentierenden Beschichtung auf einem Artikel.

In den Handel gelangende Fälschungen von Originalprodukten verursachen jährlich immense Schäden bei den ursprünglichen Herstellern dieser Produkte. Diese Schäden summieren sich wiederum zu enormen volkswirtschaftlichen Schäden. Darüber hinaus stellen gefälschte Markenartikel vermehrt auch eine Gefahr für die Verbraucher dar. Ein eindrückliches Beispiel dafür sind gefälschte Arzneimittel, die den Wirkstoff entweder gar nicht oder in der falschen Dosierung enthalten.

Daher gibt es ein großes Interesse an Sicherheitseinrichtungen, die auf Artikel aufgebracht werden können und es ermöglichen, die vom ursprünglichen Anbieter stammenden Artikel von gefälschten Artikeln auf einfache Weise zu unterscheiden.

Dabei müssen die Sicherheitseinrichtungen, die man auf den betreffenden Artikel aufbringen kann, eine Reihe von Randbedingungen erfüllen. Zwei sich zunächst widersprechende Anforderungen sind eine hohe Sicherheit vor Fälschung einerseits und die leichte Erfassbarkeit der Sicherheitseinrichtung auf allen Handelsstufen oder bei den jeweiligen Institutionen, wie Zoll und Grenzschutz, andererseits. Häufig sind die Sicherheitseinrichtungen aus dem Stand der Technik auch für den ungeübten Betrachter verifizierbar, aber dafür auch leicht zu fälschen.

Darüber hinaus können viele Sicherheitseinrichtungen, die eine hohe Fälschungssicherheit garantieren, nicht oder nur mit sehr großem Aufwand in hohen Stückzahlen hergestellt und/oder auf die Originalartikel aufgebracht werden.

Daher ist es eine Aufgabe der vorliegenden Erfindung, einen Artikel mit einer Sicherheitseinrichtung mit hoher Fälschungssicherheit sowie ein Verfahren zu seiner Herstellung bereitzustellen. Zudem ist es eine Aufgabe der vorliegenden Erfindung, einen Artikel mit einer Sicherheitseinrichtung bereitzustellen, die sich mit vertretbarem technologischen Aufwand verifizieren lässt. Schließlich ist es eine Aufgabe der vorliegenden Erfindung, einen Artikel mit einer Sicherheitseinrichtung bereitzustellen, der in sehr großen Stückzahlen herstellbar ist. Ferner ist es eine Aufgabe der Erfindung eine Verifizierungsvorrichtung sowie ein Verfahren bereitzustellen, welche das Erfassen der erfindungsgemäßen Sicherheitseinrichtung auf einfache und preiswerte Weise ermöglichen.

Zumindest eine der zuvor genannten Aufgaben wird durch einen Artikel mit einer Sicherheitseinrichtung zur Verbesserung der Fälschungssicherheit des Artikels gemäß dem unabhängigen Anspruch 1 gelöst. Dazu ist bei einem Artikel der eingangs genannten Art die Sicherheitseinrichtung aus einer ein Symbol repräsentierenden Beschichtung auf dem Artikel gebildet, wobei die Beschichtung ein Material umfasst, das ausgewählt ist aus einer Gruppe bestehend aus einem Siliziumoxid, einem Aluminiumoxid, einem Siliziumnitrid, einem Aluminiumnitrid und einem Siloxan oder einer Kombination davon.

Es ist die der Erfindung zugrunde liegende Idee, auf den jeweiligen Artikel eine Sicherheitseinrichtung in Form einer ein Symbol repräsentierenden Beschichtung aufzubringen, welches mithilfe einfacher Infrarot-Messtechnik erfassbar ist.

Vorteil von einer solchen Beschichtung, die zumindest eines der genannten Materialien umfasst, ist, dass sie auf dem jeweiligen Artikel für das menschliche Auge beinahe vollständig unsichtbar ist. Sie kann nicht ohne spezielle Maßnahmen erkannt werden. Zudem ist sie haptisch nicht wahrnehmbar, da die Beschichtung sehr dünn ausgeführt sein kann.

Die erfindungsgemäße Sicherheitseinrichtung kann nicht mit herkömmlichen Druckern hergestellt werden. Eine Beschichtung aus einem der genannten Materialien muss immer durch Abscheidung auf den Artikel aufgebracht werden. Insbesondere eignen sich zum Abscheiden eine physikalische Gasphasenabscheidung (engl. Physical Vapour Deposition, kurz PVD) oder eine chemische Gasphasenabscheidung (engl. Chemical Vapour Deposition, kurz CVD). Daher ist eine derartige Beschichtung aus einem der genannten Materialien vergleichsweise schwer nachzuahmen, da das Abscheiden einer solchen Beschichtung ein umfangreiches technologisches Know-how und eine entsprechende Ausstattung voraussetzt. Dennoch ist die Beschichtung schnell und wirtschaftlich herstellbar und somit tauglich für Massenprodukte.

Siliziumoxid kann als SiOₓ, Aluminiumoxid als AlOₓ, Siliziumnitrid als SiNₓ und Aluminiumnitrid als AlNₓ geschrieben werden.

Siloxane sind chemische Verbindungen mit der allgemeinen Formel R₃Si - [O - SiR₂]ₙ- O- SiR₃, wobei R Wasserstoffatome oder Alkylgruppen sein können (auch als SiOₓC_{y}H_{z} bezeichnet).

Bei der Beschichtung aus den genannten Materialien handelt es sich um eine Beschichtung im festen Aggregatzustand.

Unter einem Symbol wird jede bedeutungstragende Darstellung verstanden. Ein Symbol in diesem Sinne hat also einen Informationsgehalt. Dabei gibt es ganz eine Reihe von verschiedenen Möglichkeiten, der Beschichtung eine Information aufzuprägen. Eine Möglichkeit dazu ist es, die Außenkontur oder Form der Beschichtung zu gestalten. Ein Beispiele für Formen sind ein Kreis oder ein Rechteck. Die Information lässt sich der Beschichtung aber auch dadurch aufprägen, in dem diese eine über eine Fläche aus Artikeln hinweg variierende Dicke aufweist oder eine variierende Materialzusammensetzung.

In einer Ausführungsform der Erfindung ist das Symbol daher durch eine Form, eine variierende Dicke oder eine variierende Materialzusammensetzung der Beschichtung gestaltet.

Der Informationsgehalt kann der Beschichtung aber auch dadurch aufgeprägt sein, dass die Beschichtung an einer bestimmten Position auf dem Artikel angeordnet ist. In einer Ausführungsform ist dabei an einer anderen bestimmten Position auf dem Artikel gerade keine Beschichtung vorgesehen.

In einer Ausführungsform der Erfindung ist das Symbol ein Strichcode (auch als Barcode bezeichnet). Allgemeinen wird ein Strichcode von einer Mehrzahl von voneinander beabstandeten Streifen der Beschichtung gebildet. Dabei kann die Information den Streifen durch ihre Anzahl, ihre Breiten und ihre Abstände voneinander aufgeprägt sein.

In einer Ausführungsform der Erfindung umfasst der Artikel ein Produkt und ein Etikett, wobei die Sicherheitseinrichtung auf das Etikett aufgebracht ist. Etiketten sind zum Aufbringen der Sicherheitseinrichtung besonders gut geeignet. Insbesondere lässt sich die erfindungsgemäße Sicherheitseinrichtung in einem Rolle-zu-Rolle-Verfahren auf eine sehr große Anzahl von Etiketten aufbringen. Dabei wird das Material des Etiketts, beispielsweise bereits im bedruckten Zustand, von einer Rolle abgerollt, mit der Sicherheitseinrichtung beschichtet und dann erneut auf eine Rolle aufgewickelt. Von dieser zweiten Rolle können die Etiketten dann vereinzelt und auf die Mehrzahl von Produkten aufgebracht werden.

Rundum-Etiketten werden auch als Folienetiketten oder Folienbanderole bezeichnet. Dabei handelt es sich um ein Etikett, das ein Produkt Flasche wie ein Ring komplett umschließt. Diese Art der Banderole findet man häufig bei PET-Flaschen für Wasser oder Erfrischungsgetränke. Rundum-Etiketten sind typischerweise von der Rolle erhältlich.

Etiketten können aus einer Vielzahl von Materialien hergestellt sein. In einer Ausführungsform der Erfindung umfasst das Etikett einen Kunststoff, beispielsweise Polyethylen oder Polypropylen, oder Papier.

In einer Ausführungsform der Erfindung liegt eine Schichtdicke der Beschichtung in einem Bereich von 1 Nanometer bis 500 Nanometer, vorzugsweise in einem Bereich von 5 Nanometer bis 100 Nanometer und besonders bevorzugt in einem Bereich von 10 Nanometer bis 30 Nanometer.

In einer Ausführungsform der Erfindung ist der Artikel oder ein Teil davon eine Verpackung, ein Behälter oder ein technisches Bauteil.

Ein Artikel umfasst in einer Ausführungsform ein Original- oder Markenprodukt, wie z.B. ein Pharmazeutikum, eine Spirituose, ein Tabakerzeugnis, ein technisches Bauteil oder ein Luxusgut.

Heutige Pfandbehälter, z.B. PET-Einweg -oder Mehrwegflaschen, sind mit maschinenlesbaren Symbolen versehen. Im Fall von Pfandbehältern dienen Symbole, Barcodes, QR-Codes, und ähnliches als Erkennungszeichen. Diese werden auf das Etikett bzw. die Banderole aufgedruckt und können von bildgebenden Systemen, die im sichtbaren Bereich des elektromagnetischen Spektrums arbeiten, erfasst werden. Falls das erforderliche Pfand-Symbol erkannt wird, wird das Pfand ausbezahlt. Nachteil solcher sichtbaren Codes insbesondere gedruckter Codes, ist, dass diese mit wenig Aufwand gefälscht werden können.

Ein realistisches Szenario für einen erfindungsgemäßen Artikels ist daher die Fälschungssicherung eines Pfandbehälters. Es hat sich gezeigt, dass es für Kriminelle lohnend sein kann, Pfandbehälter zu fälschen, beispielsweise Einweg- oder Mehrwegpfandflaschen aus PET oder einem anderen Material, um in großem Umfang Pfandgebühren zu erschleichen.

Daher umfasst der Artikel in einer Ausführungsform einen Behälter mit einem Polymer, insbesondere mit PET.

In einer Ausführungsform der Erfindung ist der Artikel oder ein Teil davon ein im Wesentlichen zylindrischer Behälter, wobei ein Strichcode an einer Außenfläche des Behälters derart ausgerichtet ist, dass eine Abtastung in einer axialen Richtung des Behälters ein Auslesen des Symbols ermöglicht oder eine Abtastung in einer Umfangsrichtung des Behälters ein Auslesen des Symbols ermöglicht.

Eine Ausrichtung des Strichcodes entweder so, dass eine Abtastung in axialer Richtung zum Auslesen des Symbols führt oder eine Abtastung in einer Umfangsrichtung zum Auslesen des Symbols führt, ist insbesondere bei Pfandbehältern zweckmäßig. Solche Pfandbehälter werden in den Leergutrückgabeautomaten zum Bestimmen des Pfandwerts mit einem bildgebenden System erfasst. Dazu werden die Pfandbehälter um Ihre Symmetrieachse (zumeist eine Zylinderachse) gedreht und/oder in axialer Richtung vorgeschoben. Diese Bewegung kann man sich zum Auslesen eines erfindungsgemäßen Strichcodes zunutze machen. Ein solcher Leergutrücknahmeautomat kann auch ausschließlich der Rücknahme und Sortierung von Leergut dienen, wobei dann die erfindungsgemäße Sicherheitseinrichtung der Erkennung des zurückzunehmenden Materials dient.

Zumindest eine der zuvor genannten Aufgaben wird auch durch eine Verifizierungsvorrichtung gemäß dem darauf gerichteten unabhängigen Anspruch 9 gelöst. Dabei weist die Verifizierungsvorrichtung zum Erfassen einer Sicherheitseinrichtung aus einer ein Symbol repräsentierenden Beschichtung auf einem Artikel die folgenden Elemente auf: eine erste Beleuchtungseinrichtung, wobei die erste Beleuchtungseinrichtung derart eingerichtet ist, dass sie in einem Betrieb der Verifizierungsvorrichtung elektromagnetische Charakterisierungsstrahlung mit einem Charakterisierungwellenlängenbereich aus einem Bereich von 780 Nanometer bis 1 Millimeter erzeugt und abstrahlt, wobei die erste Beleuchtungseinrichtung derart eingerichtet und angeordnet ist, dass sie in dem Betrieb der Verifizierungsvorrichtung die Sicherheitseinrichtung mit der Charakterisierungsstrahlung beleuchtet; und eine erste Detektionseinrichtung, wobei die erste Detektionseinrichtung derart eingerichtet und angeordnet ist, dass sie in dem Betrieb der Verifizierungsvorrichtung eine Charakterisierungsintensität der von der Sicherheitseinrichtung zurückreflektierten Charakterisierungsstrahlung erfasst. Zusätzlich umfasst die Verifizierungseinrichtung zumindest einen Aktor oder eine zweite Beleuchtungseinrichtung und eine zweite Detektionseinrichtung. Dabei ist der Aktor derart eingerichtet, dass der Aktor in dem Betrieb der Verifizierungsvorrichtung eine Relativbewegung zwischen dem Artikel und der Detektionseinrichtung bewirkt, sodass das Symbol abtastbar ist. Die zweite Beleuchtungseinrichtung ist derart eingerichtet, dass sie in dem Betrieb der Verifizierungsvorrichtung elektromagnetische Charakterisierungsstrahlung mit dem Charakterisierung Wellenlängenbereich aus dem Bereich von 780 Nanometer bis 1 Millimeter erzeugt und abstrahlt, wobei die zweite Beleuchtungseinrichtung derart eingerichtet und angeordnet ist, dass sie in dem Betrieb der Verifizierungsvorrichtung die Sicherheitseinrichtung mit der Charakterisierungsstrahlung beleuchtet. Die zweite Detektionseinrichtung ist derart eingerichtet und angeordnet, dass sie in dem Betrieb der Verifizierungsvorrichtung eine Charakterisierungsintensität der von der Sicherheitseinrichtung zurückreflektierten Charakterisierungsstrahlung erfasst. Ferner weist die erfindungsgemäße Verifizierungsvorrichtung eine Steuer -und Auswerteeinrichtung auf. Dabei ist die Steuer -und Auswerteeinrichtung derart wirksam mit der ersten Detektionseinrichtung und optional mit der zweiten Detektionseinrichtung verbunden, dass die Steuer -und Auswerteeinrichtung in dem Betrieb der Verifizierungsvorrichtung ein die Charakterisierungsintensität eines ersten Objektpunkts repräsentierendes erstes Charakterisierungssignal von der ersten Detektionseinrichtung und optional ein die Charakterisierungsintensität eines zweiten Objektpunkts repräsentierendes zweites Charakterisierungssignal von der zweiten Detektionseinrichtung erhält. Optional ist zudem die Steuer -und Auswerteeinrichtung derart wirksam mit dem Aktor verbunden, dass der Aktor in dem Betrieb der Verifizierungsvorrichtung ein Aktorsteuersignal von der Steuer -und Auswerteeinrichtung erhält. Die Steuer -und Auswerteeinrichtung ist erfindungsgemäß derart eingerichtet, dass die Steuer -und Auswerteeinrichtung in dem Betrieb der Verifizierungsvorrichtung die Schritte ausführt,
- Erfassen der Charakterisierungsstrahlung von dem ersten Objektpunkt des Artikels mit der ersten Detektionseinrichtung und
   zumindest
- Erzeugen und Ausgeben des Aktorsteuersignals, sodass die Charakterisierungsstrahlung von dem ersten und dem zweiten Objektpunkt des Artikels zeitlich nacheinander mit der ersten Detektionseinrichtung erfasst wird,
   oder
- Erfassen der Charakterisierungsstrahlung von dem zweiten Objektpunkt des Artikels mit der zweiten Detektionseinrichtung, und
- Aufzeichnen eines zeitlichen Verlaufs zumindest des ersten Charakterisierungssignals oder einer aus dem ersten Charakterisierungssignal und dem zweiten Charakterisierungssignal abgeleiteten räumlichen Verteilung der Beschichtung,
- Bestimmen eines Maßes für eine Ähnlichkeit zwischen dem zeitlichen Verlauf zumindest des ersten Charakterisierungssignals oder der aus dem ersten Charakterisierungssignal oder dem zweiten Charakterisierungssignal abgeleiteten räumlichen Verteilung und einem vorbestimmten Mustersignal, und
- wenn das Maß für die Ähnlichkeit einen Ähnlichkeitschwellenwert unterschreitet, Ausgeben eines Fehlersignals.

Es ist die der erfindungsgemäßen Verifizierungsvorrichtung zugrunde liegende Idee, dass ein Informationsgehalt des von der Beschichtung gebildeten Symbols nur dann auslesbar ist, wenn mindestens zwei Objektpunkte einer Oberfläche des Artikels erfasst und ausgewertet werden.

Dabei liegt der erfindungsgemäßen Verifizierungsvorrichtung die Annahme zugrunde, dass in dem relevanten Wellenlängenbereich der Charakterisierungwellenlänge von 780 Nanometer bis 1 Millimeter ausschließlich Sensoren mit einem Pixel zur Verfügung stehen. Als Sensor wird die Kombination aus einer Beleuchtungseinrichtung einer Detektionseinrichtung bezeichnet. Daher müssen entweder mindestens zwei Sensoren vorgesehen sein, um gleichzeitig oder zeitlich nacheinander die zwei Objektpunkte auf dem Artikel zu erfassen oder aber ein Aktor muss eine Relativbewegung zwischen einem einzigen Sensor und dem Artikel bewirken, sodass das Symbol der Sicherheitseinrichtung mit der Verifizierungsvorrichtung abtastbar ist. Möglich ist aber auch eine Kombination aus einer Mehrzahl von Sensoren und einem Aktor.

Die erfindungsgemäße Verifizierungsvorrichtung ermöglicht es auch die räumliche Verteilung der Beschichtung, d.h. die räumliche Verteilung der Dicke bzw. der Belegungsdichte quantitativ zu erfassen.

Erfasst wird daher in einer Ausführungsform ein zeitlicher Verlauf der Charakterisierungsstrahlung während des Ausführens der Relativbewegung zwischen dem Artikel und dem Sensor mittels der ersten Beleuchtungseinrichtung und der ersten Detektionseinrichtung, wobei dieser zeitliche Verlauf bei einer entsprechenden Kenntnis der Relativbewegung auch die räumliche Verteilung der Beschichtung widerspiegelt.

In einer Ausführungsform hingegen können die Messungen der Charakterisierungsstrahlung mit dem ersten und dem zweiten Sensor gleichzeitig erfolgen, wobei diese beiden Messungen, da sie an unterschiedlichen Objektpunkten vorgenommen werden, bereits eine räumliche Verteilung der Beschichtung widerspiegeln.

Grundsätzlich ist es aber auch möglich, mehr als zwei Sensoren einzusetzen, sodass gegebenenfalls gleichzeitig Charakterisierungsstrahlung von mehr als zwei Objektpunkten erfasst werden kann.

Eine Ausführungsform, die auf einen Aktor zum Ausführen einer Relativbewegung zwischen dem Artikel und dem oder den Sensoren verzichtet, kann beispielsweise als Handgerät implementiert sein.

In einer Ausführungsform der Erfindung ist die Steuer- und Auswerteeinrichtung derart eingerichtet, dass die Steuer- und Auswerteeinrichtung in dem Betrieb der Verifizierungvorrichtung die Schritte ausführt:
- Ableiten einer räumlichen Verteilung einer Schichtdicke der Beschichtung oder einer Belegungsdichte der Beschichtung aus dem zeitlichen Verlauf des Charakterisierungssignals,
wobei das Bestimmen des Maßes für die Ähnlichkeit ein Bestimmen eines Maßes für eine Ähnlichkeit zwischen der räumlichen Verteilung der Schichtdicke oder der räumlichen Verteilung der Belegungsdichte und einem vorbestimmten Mustersignal umfasst.

In einer Ausführungsform ist die Verifizierungsvorrichtung so ausgestaltet, dass sie zusätzlich Referenzstrahlung erzeugt und detektiert. Daher ist in einer Ausführungsform der Erfindung die Beleuchtungseinrichtung derart eingerichtet, dass sie in einem Betrieb der Verifizierungsvorrichtung elektromagnetische Referenzstrahlung mit einem Referenzwellenlängenbereich aus einem Bereich von 780 Nanometer bis 1 Millimeter erzeugt und abstrahlt, wobei der Referenzwellenlängenbereich und der Charakterisierungswellenlängenbereich voneinander verschieden sind, wobei die Beleuchtungseinrichtung derart eingerichtet und angeordnet ist, dass sie in dem Betrieb der Verifizierungsvorrichtung die Sicherheitseinrichtung mit der Referenzstrahlung beleuchtet, wobei die Detektionseinrichtung derart eingerichtet und angeordnet ist, dass die Detektionseinrichtung in dem Betrieb der Verifizierungsvorrichtung eine Referenzintensität der von der Sicherheitseinrichtung zurück reflektierten Referenzstrahlung erfasst, und wobei die Auswerteeinrichtung derart wirksam mit der Detektionseinrichtung verbunden ist, dass die Auswerteeinrichtung im Betrieb der Verifizierungsvorrichtung ein die Referenzintensität repräsentierendes Referenzsignal erhält, wobei die Auswerteeinrichtung derart eingerichtet ist, dass das Aufzeichnen des zeitlichen Verlaufs zumindest des ersten Charakterisierungssignals oder der zumindest aus dem ersten Charakterisierungssignal oder dem zweiten Charakterisierungssignal abgeleiteten räumlichen Verteilung der Beschichtung ein Normieren des Charakterisierungssignals mit dem Referenzsignal zu einem normierten Charakterisierungssignal umfasst, so dass ein normierter zeitlicher Verlauf oder eine normierte räumliche Verteilung mit dem vorbestimmten Mustersignal für das Bestimmen des Maßes für die Ähnlichkeit verwendet wird.

Dabei sind in einer Ausführungsform die Beleuchtungseinrichtung und die Detektionseinrichtung derart ausgestaltet und angeordnet, dass in dem Betrieb der Verifizierungsvorrichtung das Beleuchten und das Erfassen derart erfolgen, dass bei dem Erfassen Referenzstrahlung erfasst wird, deren Einfallswinkel bezogen auf ein Einfallslot auf einer Oberfläche der Beschichtung jeweils in zumindest einer Ebene über einen Bereich von mindestens 20 Grad, vorzugsweise über einen Bereich von mindestens 30 Grad variieren.

In einer Ausführungsform der Erfindung umfasst die Beleuchtungseinrichtung eine erste Strahlungsquelle für die Charakterisierungsstrahlung. In einer weiteren Ausführungsform umfasst die Beleuchtungseinrichtung eine zweite Strahlungsquelle für die Referenzstrahlung. In einer weiteren Ausführungsform umfasst die Beleuchtungseinrichtung eine einzige Strahlungsquelle, wobei die Strahlungsquelle ein thermischer Strahler ist, der gleichzeitig die Charakterisierungsstrahlung und die Referenzstrahlung erzeugt und abstrahlt.

Die Breitbandigkeit eines solchen thermischen Strahlers führt auch dazu, dass die Charakterisierungsstrahlung und optional die Referenzstrahlung nur eine geringe Kohärenzlänge aufweist und damit hilft, die auftretende Indifferenz zu reduzieren.

In einer Ausführungsform umfasst die Beleuchtungseinrichtung eine Beleuchtungsoptik, vorzugsweise mit einer oder mehreren Linsen oder einem oder mehreren Hohlspiegeln.

In einer Ausführungsform der Erfindung umfasst die Detektionseinrichtung einen ersten pyroelektrischen Detektor für die Charakterisierungsstrahlung.

In einer Ausführungsform der Erfindung umfasst die Detektionseinrichtung sowohl den ersten pyroelektrischen Detektor als auch einen zweiten pyroelektrischen Detektor, wobei der erste pyroelektrische Detektor für die Charakterisierungsstrahlung und nicht für die Referenzstrahlung sensitiv ist und der zweite pyroelektrische Detektor für die Referenzstrahlung sensitiv ist. Mit einer solchen Anordnung lassen sich die Charakterisierungsstrahlung und die Referenzstrahlung gleichzeitig erfassen. Beispielsweise kann der erste pyroelektrische Detektor einen anderen Wellenlängenfilter aufweisen als der zweite pyroelektrische Detektor. In einer Ausführungsform ist der zweite pyroelektrische Detektor für die Referenzstrahlung und für die Charakterisierungsstrahlung sensitiv. Jedoch ist eine Ausführungsform bevorzugt, bei welcher der zweite pyroelektrische Detektor für die Referenzstrahlung und nicht für die Charakterisierungsstrahlung sensitiv ist.

Zumindest eine der zuvor genannten Aufgaben wird auch durch einen Leergutrücknahmeautomaten gemäß dem darauf gerichteten Anspruch 11 gelöst. Dazu weist der Leergutrücknahmeautomat gemäß der vorliegenden Erfindung eine Verifizierungseinrichtung gemäß einer der zuvor beschriebenen Ausführungsformen auf, wobei der Aktor derart ausgestaltet und angeordnet ist, dass er einen zylindrischen Leergutbehälter während des Betriebs des Leergutrücknahmeautomaten zumindest in einer axialen Richtung vorschiebt oder um eine Achse dreht.

Die bildgebenden Systeme für das Auslesen von maschinenlesbaren, gedruckten Symbolen in den Leergutrücknahmeautomaten aus dem Stand der Technik werden durch eine Integration der erfindungsgemäßen Verifizierungsvorrichtung in den Leegutrücknahmeautomaten obsolet. Insbesondere in einem solchen Leergutrücknahmeautomaten ist es möglich, eine Mehrzahl von Sensoren vorzusehen, während gleichzeitig ein Aktor eine Relativbewegung zwischen dem Leergutbehälter und den Sensoren bewirkt. Beispielsweise sind dabei eine Mehrzahl von Sensoren in Umfangsrichtung um dem Transportpfad für den Leergutbehälter herum angeordnet, beispielsweise vier Sensoren, die in Umfangsrichtung jeweils um 90° voneinander beabstandet sind.

Darüber hinaus wird zumindest eine der zuvor genannten Aufgaben auch durch ein System mit einer Mehrzahl von Artikeln gemäß einer der zuvor beschriebenen Ausführungsformen und mit einer Verifizierungsvorrichtung gemäß einer zuvor beschriebenen Ausführungsformen oder einem Leergutrücknahmeautomaten gemäß einer zuvor beschriebenen Ausführungsformen gelöst.

Zumindest eine der zuvor genannten Aufgaben wird auch durch ein Verfahren zum Herstellen eines Artikels mit einer Sicherheitseinrichtung zur Verbesserung der Fälschungssicherheit des Artikels gemäß dem unabhängigen Anspruch 13 gelöst. Dazu weist das Verfahren die Schritte auf:
- Bereitstellen des Artikels und
- Aufbringen der Sicherheitseinrichtung aus einer ein Symbol repräsentierenden Beschichtung auf den Artikel, wobei die Beschichtung ein Material umfasst, das ausgewählt ist aus einer Gruppe bestehend aus einem Siliziumoxid, einem Aluminiumoxid, einem Siliziumnitrid, einem Aluminiumnitrid und einem Siloxan oder eine Kombination davon.

Soweit im Folgenden Aspekte der Erfindung im Hinblick auf das Verfahren zum Herstellen des Artikels beschrieben werden, so gelten diese auch für den Artikel und umgekehrt.

In einer Ausführungsform der Erfindung umfasst das Bereitstellen des Artikels die Schritte:
- Bereitstellen eines Produkts als Teil des Artikels,
- Bereitstellen eines Etiketts als Teil des Artikels in Form eines Abschnitts eines Bandes und
- Verbinden des Produkts und des Etiketts, so dass sie den Artikel oder einen Teil davon bilden,
wobei das Aufbringen der Beschichtung die Schritte umfasst:
- Bewegen des Bandes in einer Vorschubrichtung relativ zu einer Quelle des Materials der Beschichtung und
- Aussetzen des Bandes einem Molekülstrom des Materials von der Quelle.

Ferner wird zumindest eine der zuvor genannten Aufgaben auch durch ein Verfahren zum Verifizieren einer Sicherheitseinrichtung aus einer ein Symbol repräsentierenden Beschichtung auf einem Artikel gelöst, wobei das Verfahren die Schritte aufweist:
- Beleuchten der Sicherheitseinrichtung mit elektromagnetischer Charakterisierungsstrahlung mit einem Charakterisierungswellenlängenbereich aus einem Bereich von 780 Nanometer bis 1 Millimeter,
- Erfassen jeweils einer Charakterisierungsintensität für mindestens zwei Objektpunkte der von der Sicherheitseinrichtung zurückreflektierten Charakterisierungsstrahlung,
- Aufzeichnen einer räumlichen Verteilung der Beschichtung, die aus der Charakterisierungintensität der mindestens zwei Objektpunkte abgeleitet wird,
- Bestimmen eines Maßes für eine Ähnlichkeit zwischen der räumlichen Verteilung und einem vorbestimmten Mustersignal und
- wenn das Maß für die Ähnlichkeit einen Ähnlichkeitschwellenwert unterschreitet, Ausgeben eines Fehlersignals.

In einer Ausführungsform der Erfindung weist das Verfahren weiterhin die Schritte auf: Erzeugen von elektromagnetischer Referenzstrahlung mit einem Referenzwellenlängenbereich aus einem Bereich von 780 Nanometer bis 1 Millimeter, wobei die Absorptionsbande des Materials der Beschichtung außerhalb des Referenzwellenlängenbereichs liegt, Beleuchten der Sicherheitseinrichtung mit der Referenzstrahlung, Erfassen einer Referenzintensität der von der Sicherheitseinrichtung zurückreflektierten Referenzstrahlung, wobei das Aufzeichnen der räumlichen Verteilung der Beschichtung der Schichtdicke ein Normieren der Charakterisierungsintensität mit der Referenzintensität zu einer normierten Charakterisierungsintensität umfasst. Ein solches Vorgehen reduziert Messfehler und erhöht damit die Messgenauigkeit der räumlichen Verteilung der Beschichtung insbesondere aber der räumlichen Verteilung der Schichtdicke. Ein Verfahren mit diesen Schritten wird auch als differenzielles Verfahren bezeichnet.

Soweit im Folgenden Aspekte der Erfindung im Hinblick auf das Verfahren zum Verifizieren der Sicherheitseinrichtung beschrieben werden, so gelten diese auch für den Artikel, für die Verifizierungsvorrichtung sowie für das System aus einer Mehrzahl von Artikeln und der Verifizierungsvorrichtung und umgekehrt. Soweit das Verfahren mit einer Verifizierungsvorrichtung gemäß dieser Erfindung ausgeführt wird, so weist diese die entsprechenden Einrichtungen hierfür auf. Insbesondere sind Ausführungsformen der Verifizierungsvorrichtung zum Ausführen der beschriebenen Ausführungsformen des Verfahrens geeignet.

Das Fehlersignal kann auf verschiedene Weise weiterverarbeitet werden. Beispielsweise kann das Fehlersignal verhindern, dass einem Benutzer Pfand für das Leergut zurückgegeben wird, wenn sich herausstellt, dass der Leergutbehälter gefälscht ist.

In einer Ausführungsform umfasst das Verfahren die Schritte:
- Ausführen eine Relativbewegung zwischen dem Artikel und der Detektionseinrichtung, sodass eine Mehrzahl von Objektpunkten einer Oberfläche des Artikels mit der Charakterisierungsstrahlung abgetastet wird,
- Aufzeichnen eines zeitlichen Verlaufs der Charakterisierungsintensität oder einer aus dem zeitlichen Verlauf der Charakterisierungsintensität abgeleiteten räumlichen Verteilung der Beschichtung und
- Bestimmen eines Maßes für eine Ähnlichkeit zwischen dem zeitlichen Verlauf der Charakterisierungsintensität oder der aus dem zeitlichen Verlauf der Charakterisierungsintensität abgeleiteten räumlichen Verteilung der Beschichtung und einem vorbestimmten Mustersignal.

In einer Ausführungsform der Erfindung erfolgen das Beleuchten des Artikels mit der Charakterisierungsstrahlung oder das Erfassen der Charakterisierungsstrahlung von dem Artikel derart, dass bei dem Erfassen Charakterisierungsstrahlung erfasst wird, deren Einfallswinkel bezogen auf ein Einfallslot auf einer Oberfläche der Beschichtung jeweils in zumindest einer Ebene über einen Bereich von mindestens 20 Grad variieren.

In einer Ausführungsform der Erfindung erfolgen das Beleuchten und das Erfassen derart, dass bei dem Erfassen Charakterisierungsstrahlung erfasst wird, deren Einfallswinkel bezogen auf das Einfallslot in der Ebene über einen Bereich von mindestens 30 Grad variieren.

Die angegebene Winkelaufweitung kann sinnvoll sein, wenn die Beschichtung der Sicherheitseinrichtung auf ein Etikett aufgebracht wird.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit identischen Bezugszeichen bezeichnet.
- Figur 1: ist eine schematische Querschnittsansicht durch eine Ausführungsform eines Sensors für eine erfindungsgemäße Verifizierungsvorrichtung.
- Figur 2: ist eine Auftragung des mit dem Sensor aus Figur 1 messbaren relativen Reflexionsvermögens verschiedener Schichtdicken von AlOₓ und SiOₓ auf einer Folie gegen die Wellenzahl und die Wellenlänge der Charakterisierungsstrahlung.
- Figur 3: ist eine schematische Querschnittsansicht einer Ausführungsform eines erfindungsgemäßen Leergutrücknahmeautomaten gemäß einer Ausführungsform der vorliegenden Erfindung.
- Figur 4: ist eine schematische Querschnittsansicht eines Leegutrücknahmeautomaten gemäß einer weiteren Ausführungsform der vorliegenden Erfindung.
- Figur 5: ist eine schematische Querschnittsansicht einer Verifizierungsvorrichtung gemäß einer Ausführungsform der vorliegenden Erfindung.

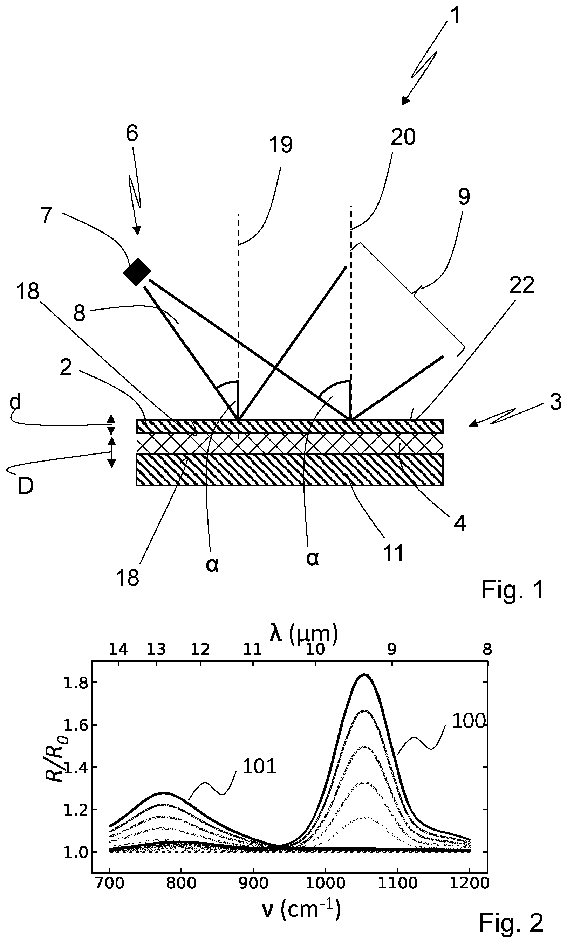

Figur 1 ist eine schematische Querschnittsansicht eines Sensors 1 zum Erfassen einer Beschichtung 2 auf einem Rundum-Etikett 4 aus Polyethylen-Folie. Das Rundum-Etikett 4 ist an einer Einweg-Pfandflasche 11 aus PET befestigt. Die PET-Flasche 11 ist im Sinne der vorliegenden Anmeldung ein Produkt. Das Rundumetikett 4 und die PET-Einwegflasche 11 bilden zusammen einen Artikel 3, dessen Fälschungssicherheit es zu gewährleisten gilt.

Mit dem Sensor 1 lässt sich nicht nur das Vorhandensein der Beschichtung 2 erfassen, sondern auch eine räumliche Verteilung einer Schichtdicke d der Beschichtung 2 und damit das Symbol der von der Beschichtung 2 gebildeten Sicherheitseinrichtung 18. Die Zeichnung ist schematisch, verdeutlicht aber das der vorliegenden Erfindung zugrunde liegende Messprinzip zum Verifizieren des Artikels 3. Anhand der Figur wird auch das erfindungsgemäße Verfahren beschrieben.

Der Sensor 1 ist in der beschriebenen Variante Teil eines Leergutrücknahmeautomaten 10. Ein solcher Leergutrücknahmeautomat zahlt einem Verbraucher ein Pfandgeld aus oder gibt einen entsprechenden Beleg aus, wenn eine in den Automaten eingeführte Pfandflasche eindeutig als solche identifiziert wurde. Bisher werden Pfandflaschen mit sichtbar aufgedruckten Symbolen gekennzeichnet, welche maschinenlesbar sind. Dies öffnet Tür und Tor für einen Missbrauch. Gefälschte Pfandflaschen mit dem gleichen Symbol werden in Massen hergestellt und an den Automaten eingelöst.

Um dies zu vermeiden ist bei dem erfindungsgemäßen System auf jede der Pfandflaschen eine Beschichtung 2 aufgebracht, welche ein Symbol bildet. Dabei ist in den gezeigten Ausführungsformen die Beschichtung 2 auf das Rundum-Etikett 4 in Form eines Strichcodes (Barcode) aufgetragen. In der dargestellten Ausführungsform besteht die Beschichtung 2 aus einem Siliziumoxid (SiOₓ).

Der Sensor 1 umfasst eine Beleuchtungseinrichtung 6 mit einem thermischen Strahler 7, der in dem Betrieb des Sensors 1 elektromagnetische Strahlung 8 im infraroten Spektralbereich breitbandig erzeugt. In der gezeigten Ausführungsform erzeugt der thermische Strahler 7 elektromagnetische Strahlung 8 mit Wellenlängen in einem Bereich von 1 Mikrometer bis 20 Mikrometer. Die von dem thermischen Strahler 7 abgestrahlte elektromagnetische Strahlung dient als Charakterisierungsstrahlung 8. In Figur 1 ist der Strahlengang hin zu der Detektionseinrichtung 9 nur schematisch angedeutet.

Der Wellenlängenbereich der Charakterisierungsstrahlung 8 ist derart gewählt, dass eine Absorptionsbande des SiOₓ der Beschichtung 2 in diesen Charakterisierungswellenlängenbereich fällt. Dann bildet die Charakterisierungsintensität der Charakterisierungsstrahlung in Strahlrichtung nach dem Artikel 3 ein Maß für die Absorption durch die Beschichtung 2. Diese Absorption nimmt zu, wenn die Schichtdicke d größer ist und nimmt ab, wenn die Schichtdicke d kleiner ist. Somit ist die Charakterisierungsintensität ein direktes Maß für die Schichtdicke d oder die Belegungsdichte der Beschichtung 2.

In dem in Figur 2 gezeigten Graphen ist die relative Reflexion R/R₀ der Beschichtung 2 gegenüber der Wellenzahl (untere x-Achse) und gegenüber der Wellenlänge in Mikrometern (obere x-Achse) aufgetragen. Dabei erfolgte die Auftragung für eine Vielzahl von Schichtdicken. Die Absorption von SiOₓ ist mit dem Bezugszeichen 100 bezeichnet, die relative Reflexion von AlOₓ mit 101. Dargestellt ist relative Reflektivität für unterschiedliche Schichtdicken (0, 10, 20, 30, 40, 50 Nanometer). Normiert ist die Reflektivität auf die Reflektivität R₀ des unbeschichteten Rundum-Etiketts.

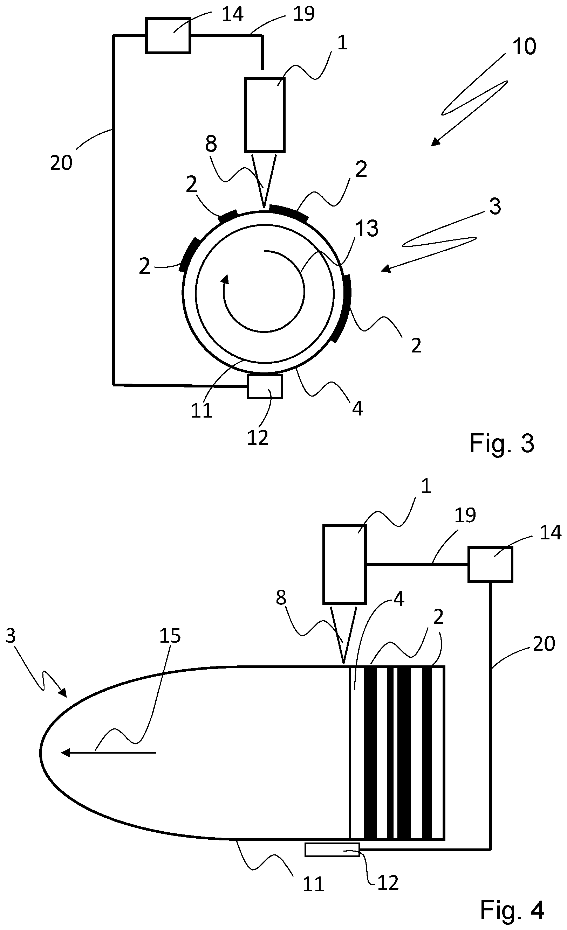

Figur 3 zeigt eine schematische Querschnittsansicht einer ersten Ausführungsform des Leergutrücknahmeautomaten 10. In dieser Variante sichert die Beschichtung 2 in Form eines Barcodes die PET-Flasche 11 gegenüber Fälschungen. Dabei ist der Barcode in der gezeigten Variante in Form von längsverlaufenden Streifen (diese erstrecken sich in der Darstellung der Figur 3 senkrecht zur Papierebene), die in Umfangsrichtung voneinander beabstandet sind. Daher weist die Variante des Leergutrücknahmeautomaten 10 aus Figur 3 einen Aktor 12 auf, welcher den Artikel 3 mit der PET-Flasche 11, dem Rundum-Etikett 4 und der Beschichtung 2 um die Achse der PET-Flasche 11 in eine Rotationsbewegung 13 versetzt. Auf diese Weise kann mit einem Sensor 1 aus Figur 1, der nur einen einzigen Objektpunkt auf der Oberfläche des Rundum-Etiketts 4 zu einem Zeitpunkt erfassen kann, der Barcode aus den einzelnen Abschnitten der Beschichtung 2 erfasst werden.

Der zeitliche Verlauf des Charakterisierungssignals, das von dem Sensor 1 erzeugt wird, lässt sich unter Berücksichtigung der Drehgeschwindigkeit der Drehbewegung 13 in eine räumliche Verteilung der Beschichtung 2 auf der Oberfläche des Rundum-Etiketts 4 umrechnen. Diese wird erfindungsgemäß mit einem hinterlegtem Mustersignal verglichen. Fällt die Ähnlichkeit zwischen dem für den Vergleich berechneten Maß für die Ähnlichkeit unter einen vorgegebenen Ähnlichkeitsschwellenwert, so gibt die Steuer- und Auswerteeinrichtung 14 ein Fehlersignal aus und der Leergutrücknahmeautomat 10 gibt dem Benutzer den das Pfandgeld wiederspiegelnden Beleg nicht aus.

Figur 4 zeigt eine Variante, bei der sich die Streifen des aus der Beschichtung 2 gebildeten Strichcodes in Umfangsrichtung erstrecken, sodass die einzelnen Streifen in axialer Richtung voneinander beabstandet sind. In einer solchen Ausführungsform bewirkt der Aktor 12 einen Vorschub des Artikels 3 in der axialen Richtung 15, sodass der Sensor 1 die Streifen abtastet.

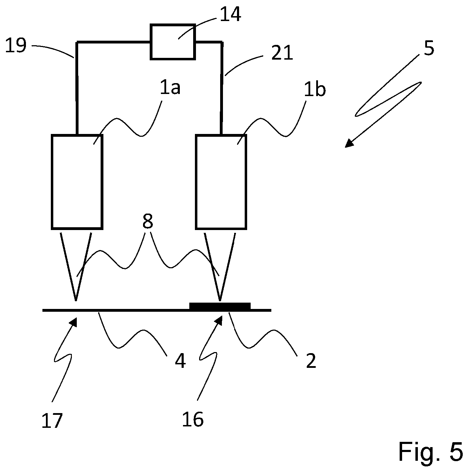

Figur 5 zeigt eine alternative Ausführungsform, die auf einen Aktor 12 verzichten kann. In dieser Ausführungsform umfasst die Verifizierungsvorrichtung zwei Sensoren 1a, 1b, so wie diese schematisch in Figur 1 gezeigt sind.

Die Verifizierungsvorrichtung 5 aus Figur 5 sieht vor, dass das von der Beschichtung 2 gebildete Symbol eine Beschichtung 2 an einer ersten definierten Position 16 auf dem Etikett 4 aufweist und keine Beschichtung an einer zweiten definierten Position 17 auf dem Etikett 4. Dieses Symbol lässt sich mit den zwei Sensoren 1a, 1b mit zwei Messungen zu einem einzigen Zeitpunkt erfassen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Sensor
- 2: Beschichtung
- 3: Artikel
- 4: Rundum-Etikett
- 5: Verifizierungsvorrichtung
- 6: Beleuchtungseinrichtung
- 7: thermischer Strahler
- 8: Charakterisierungsstrahlung
- 9: Detektionseinrichtung
- 10: Leergutrücknahmeautomat
- 11: PET-Flasche
- 12: Aktor
- 13: Rotationsbewegung
- 14: Steuer- und Auswerteeinrichtung
- 15: axiale Richtung
- 16: erste definierte Position
- 17: zweite definierte Position
- 18: Sicherheitseinrichtung
- 19: erstes Charakterisierungssignal
- 20: Aktorsteuersignal
- 21: zweites Charakterisierungssignal

- 100: relative Reflektivität von SiOₓ
- 101: relative Reflektivität von AlOₓ

- α: Einfallswinkel
- d: Schichtdicke
- D: Dicke des Rundum-Etiketts

## Patentansprüche

1. Artikel (3) mit einer Sicherheitseinrichtung (18) zur Verbesserung der Fälschungssicherheit des Artikels,
wobei die Sicherheitseinrichtung (18) aus einer ein Symbol repräsentierenden Beschichtung (2) auf dem Artikel (3) gebildet ist,
wobei die Beschichtung (2) ein Material umfasst, das ausgewählt ist aus einer Gruppe bestehend aus einem Siliziumoxid, einem Aluminiumoxid, einem Siliziumnitrid, einem Aluminiumnitrid und einem Siloxan oder einer Kombination davon.

2. Artikel (3) nach dem vorhergehenden Anspruch, wobei das Symbol durch eine Form, eine variierende Dicke (d) oder eine variierende Materialzusammensetzung der Beschichtung (2) gestaltet ist.

3. Artikel (3) nach einem der vorhergehenden Ansprüche, wobei das Symbol ein Strichcode ist.

4. Artikel (3) nach einem der vorhergehenden Ansprüche, wobei der Artikel (3) ein Produkt (11) und ein Etikett (4) umfasst, wobei die Sicherheitseinrichtung auf das Etikett aufgebracht ist.

5. Artikel (3) nach einem der vorhergehenden Ansprüche, wobei der Artikel (3) oder ein Teil davon eine Verpackung, ein Behälter (11) oder ein technisches Bauteil umfasst.

6. Artikel (3) nach einem der vorhergehenden Ansprüche, soweit von Anspruch 3 abhängig, wobei der Artikel (3) oder ein Teil davon ein zylindrischer Behälter (11) ist, wobei der Strichcode derart ausgerichtet ist, dass eine Abtastung in einer axialen Richtung des Behälters (11) ein Auslesen des Symbols ermöglicht oder eine Abtastung in einer Umfangsrichtung des Behälters (11) ein Auslesen des Symbols ermöglicht.

7. Artikel (3) nach einem der vorhergehenden Ansprüche, wobei eine Schichtdicke (d) der Beschichtung (2) in einem Bereich von 1 Nanometer bis 500 Nanometer liegt, vorzugsweise in einem Bereich von 5 Nanometer bis 100 Nanometer liegt und besonders bevorzugt in einem Bereich von 10 Nanometer bis 30 Nanometer liegt.

8. Artikel (3) nach einem der vorhergehenden Ansprüche, wobei das Produkt (11) ein Polymer, insbesondere PET, umfasst.

9. Verifizierungsvorrichtung (5) zum Erfassen einer Sicherheitseinrichtung (18) aus einer ein Symbol repräsentierenden Beschichtung (2) auf einem Artikel (3), wobei die Verifizierungsvorrichtung (5) aufweist
eine erste Beleuchtungseinrichtung (6),
wobei die erste Beleuchtungseinrichtung (6) derart eingerichtet ist, dass sie in einem Betrieb der Verifizierungsvorrichtung (5) elektromagnetische Charakterisierungsstrahlung (8) mit einem Charakterisierungswellenlängenbereich aus einem Bereich von 780 Nanometer bis 1 Millimeter erzeugt und abstrahlt,
wobei die erste Beleuchtungseinrichtung (6) derart eingerichtet und angeordnet ist, dass sie in dem Betrieb der Verifizierungsvorrichtung (5) die Sicherheitseinrichtung (18) mit der Charakterisierungsstrahlung (8) beleuchtet,
eine erste Detektionseinrichtung (9),
wobei die erste Detektionseinrichtung (9) derart eingerichtet und angeordnet ist, dass die erste Detektionseinrichtung (9) in dem Betrieb der Verifizierungsvorrichtung (5) eine Charakterisierungsintensität der von der Sicherheitseinrichtung (18) zurückreflektierten Charakterisierungsstrahlung (8) erfasst,
zumindest einen Aktor (12),
wobei der Aktor (12) derart eingerichtet ist, dass der Aktor (12) in dem Betrieb der Verifizierungsvorrichtung (5) eine Relativbewegung zwischen dem Artikel (3) und der Detektionseinrichtung (9) bewirkt, so dass das Symbol abtastbar ist,
oder eine zweite Beleuchtungseinrichtung und eine zweite Detektionseinrichtung,
wobei die zweite Beleuchtungseinrichtung derart eingerichtet ist, dass sie in einem Betrieb der Verifizierungsvorrichtung (5) elektromagnetische Charakterisierungsstrahlung (8) mit dem Charakterisierungswellenlängenbereich aus dem Bereich von 780 Nanometer bis 1 Millimeter erzeugt und abstrahlt,
wobei die zweite Beleuchtungseinrichtung derart eingerichtet und angeordnet ist, dass sie in dem Betrieb der Verifizierungsvorrichtung (5) die Sicherheitseinrichtung (18) mit der Charakterisierungsstrahlung (8) beleuchtet,
wobei die zweite Detektionseinrichtung derart eingerichtet und angeordnet ist, dass die zweite Detektionseinrichtung in dem Betrieb der Verifizierungsvorrichtung (5) eine Charakterisierungsintensität der von der Sicherheitseinrichtung (18) zurückreflektierten Charakterisierungsstrahlung (8) erfasst, und
eine Steuer- und Auswerteeinrichtung (14),
wobei die Steuer- und Auswerteeinrichtung (14) derart wirksam mit der ersten Detektionseinrichtung (9) und optional mit der zweiten Detektionseinrichtung verbunden ist, dass die Steuer- und Auswerteeinrichtung (14) in dem Betrieb der Verifizierungsvorrichtung (5) ein die Charakterisierungsintensität eines ersten Objektpunkts repräsentierendes erstes Charakterisierungssignal (19) von der ersten Detektionseinrichtung (9) und optional ein die Charakterisierungsintensität eines zweiten Objektpunkts repräsentierendes zweites Charakterisierungssignal (21) von der zweiten Detektionseinrichtung erhält,
wobei optional die Steuer- und Auswerteeinrichtung (14) derart wirksam mit dem Aktor (12) verbunden ist, dass der Aktor (12) in dem Betrieb der Verifizierungsvorrichtung (5) ein Aktorsteuersignal (20) von der Steuer- und Auswerteeinrichtung (14) erhält, und
wobei die Steuer- und Auswerteeinrichtung (14) derart eingerichtet ist, dass die Steuer- und Auswerteeinrichtung (14) in dem Betrieb der Verifizierungsvorrichtung (5) die Schritte ausführt
- Erfassen der Charakterisierungsstrahlung (8) von dem ersten Objektpunkt des Artikels (3) mit der ersten Detektionseinrichtung (9) und
entweder
- Erzeugen und Ausgeben des Aktorsteuersignals (20), so dass die Charakterisierungsstrahlung (8) von dem ersten und dem zweiten Objektpunkt des Artikels (3) zeitlich nacheinander mit der ersten Detektionseinrichtung (9) erfasst wird,
oder
- Erfassen der Charakterisierungsstrahlung (8) von dem zweiten Objektpunkt des Artikels (3) mit der zweiten Detektionseinrichtung, und
- Aufzeichnen eines zeitlichen Verlaufs zumindest des ersten Charakterisierungssignals (19) oder einer zumindest aus dem ersten Charakterisierungssignal (19) oder dem zweiten Charakterisierungssignal (21) abgeleiteten räumlichen Verteilung der Beschichtung (2),
- Bestimmen eines Maßes für eine Ähnlichkeit zwischen dem zeitlichen Verlauf zumindest des ersten Charakterisierungssignals (19) oder der aus dem ersten Charakterisierungssignal (19) oder dem zweiten Charakterisierungssignal (21) abgeleiteten räumlichen Verteilung der Beschichtung (2) und einem vorbestimmten Mustersignal, und
- wenn das Maß für die Ähnlichkeit einen Ähnlichkeitsschwellenwert unterschreitet, Ausgeben eines Fehlersignals.

10. Verifizierungsvorrichtung (5) nach dem vorhergehenden Anspruch, wobei die Steuer- und Auswerteeinrichtung (14) derart eingerichtet ist, dass die Steuer- und Auswerteeinrichtung (14) in dem Betrieb der Verifizierungsvorrichtung (5) die Schritte ausführt
- Ableiten einer räumlichen Verteilung einer Schichtdicke (d) der Beschichtung (2) oder einer Belegungsdichte der Beschichtung (2) aus dem zeitlichen Verlauf des ersten Charakterisierungssignals (19),
- wobei das Bestimmen des Maßes für die Ähnlichkeit ein Bestimmen eines Maßes für eine Ähnlichkeit zwischen der räumlichen Verteilung der Schichtdicke (d) oder der räumlichen Verteilung der Belegungsdichte und einem vorbestimmten Mustersignal umfasst.

11. Leergutrücknahmeautomat (10) mit einer Verifizierungseinrichtung (5) nach Anspruch 9 oder 10, wobei der Aktor (12) derart ausgestaltet und angeordnet ist, dass er einen Leergutbehälter (11) während des Betriebs des Leergutrücknahmeautomaten (10) zumindest in einer axialen Richtung (15) vorschiebt oder um eine Achse dreht.

12. System mit einer Mehrzahl von Artikeln (3) nach einem der Ansprüche 1 bis 8 und mit einer Verifizierungsvorrichtung (5) nach Anspruch 9 oder 10 oder einem Leergutrücknahmeautomaten (10) nach Anspruch 11.

13. Verfahren zum Herstellen eines Artikels (3) mit einer Sicherheitseinrichtung (18) zur Verbesserung der Fälschungssicherheit des Artikels (3) mit den Schritten
- Bereitstellen des Artikels (3) und
- Aufbringen der Sicherheitseinrichtung (18) aus einer ein Symbol repräsentierenden Beschichtung (2) auf den Artikel (3),
wobei die Beschichtung (2) ein Material umfasst, das ausgewählt ist aus einer Gruppe bestehend aus einem Siliziumoxid, einem Aluminiumoxid, einem Siliziumnitrid, einem Aluminiumnitrid und einem Siloxan oder einer Kombination davon.

14. Verfahren nach dem vorhergehenden Anspruch, wobei das Bereitstellen des Artikels (3) die Schritte umfasst
- Bereitstellen eines Produkts (11) als Teil des Artikels (3),
- Bereitstellen eines Etiketts (4) als Teil des Artikels (3) in Form eines Abschnitts eines Bandes und
- Verbinden des Produkts (11) und des Etiketts (4), so dass sie den Artikel (3) oder einen Teil davon bilden,
wobei das Aufbringen der Beschichtung (2) die Schritte umfasst
- Bewegen des Bandes in einer Vorschubrichtung relativ zu einer Quelle des Materials der Beschichtung und
- Aussetzen des Bandes einem Molekülstrom des Materials von der Quelle.

15. Verfahren zum Verifizieren einer Sicherheitseinrichtung (18) aus einer ein Symbol repräsentierenden Beschichtung (2) auf einem Artikel (3), wobei das Verfahren die Schritte aufweist
- Beleuchten der Sicherheitseinrichtung (18) mit elektromagnetischer Charakterisierungsstrahlung (8) mit einem Charakterisierungswellenlängenbereich aus einem Bereich von 780 Nanometer bis 1 Millimeter,
- Erfassen jeweils einer Charakterisierungsintensität für mindestens zwei Objektpunkte der von der Sicherheitseinrichtung (18) zurückreflektierten Charakterisierungsstrahlung (8),
- Aufzeichnen einer räumlichen Verteilung der Beschichtung (2), die aus der Charakterisierungsintensität der mindestens zwei Objektpunkte abgeleitet wird,
- Bestimmen eines Maßes für eine Ähnlichkeit zwischen der räumlichen Verteilung und einem vorbestimmten Mustersignal und
- wenn das Maß für die Ähnlichkeit einen Ähnlichkeitsschwellenwert unterschreitet, Ausgeben eines Fehlersignals.
